(19) Europäisches Patentamt

European Patent Office

Office européen des brevets

(11) Veröffentlichungsnummer: **0 231 818 B1**

(12) **EUROPÄISCHE PATENTSCHRIFT**

(45) Veröffentlichungstag der Patentschrift: **12.08.92**

(51) Int. Cl.⁵: **B23B 29/034**

(21) Anmeldenummer: **87100803.3**

(22) Anmeldetag: **21.01.87**

(54) **Senkwerkzeug zum beidseitigen Anbringen von Planflächen an Durchgangsbohrungen.**

(30) Priorität: **29.01.86 DE 3602667**

(43) Veröffentlichungstag der Anmeldung:
**12.08.87 Patentblatt 87/33**

(45) Bekanntmachung des Hinweises auf die
Patenterteilung:
**12.08.92 Patentblatt 92/33**

(84) Benannte Vertragsstaaten:
**AT BE CH DE ES FR GB GR IT LI LU NL SE**

(56) Entgegenhaltungen:
EP-A- 0 129 116    DE-B- 2 516 110
FR-A- 390 124      GB-A- 548 372
US-A- 1 881 523    US-A- 2 814 964
US-A- 3 625 624

(73) Patentinhaber: **Heule, Heinrich**

**CH-9436 Balgach(CH)**

(72) Erfinder: **Heule, Heinrich**

**CH-9436 Balgach(CH)**

(74) Vertreter: **Riebling, Peter, Dr.-Ing., Patentanwalt
Rennerle 10, Postfach 31 60
W-8990 Lindau/B.(DE)**

# Beschreibung

Die Erfindung betrifft ein Senkwerkzeug nach dem Oberbegriff des Patentanspruchs 1.

Ein derartiges Senkwerkzeug ist mit der auf den gleichen Anmelder zurückgehenden DE 33 21 111 A1 oder der EP 129 116 A2 bekannt geworden. Auf den Offenbarungsgehalt dieser beiden Druckschriften wird Bezug genommen, sofern er zur Erläuterung der vorliegenden Erfindung dient. Die Offenbarung dieser beiden Druckschriften soll also vollinhaltlich in die Erläuterung der vorliegenden Erfindung einbezogen werden.

Merkmal des bekannten Senkwerkzeuges ist, daß die Schneidkörper mit in entgegengesetzten Richtungen weisenden Schneiden im Werkzeugkopf radial verschiebbar und feststellbar in Aufnahmeschlitzen geführt sind. Das Profil dieser Aufnahmeschlitze ist rechteckförmig und durchbricht fensterartig in radialer Richtung den Außenumfang des Werkzeugkopfes.

Versuche haben nun gezeigt, daß die Schneidkörper erhöhten Zerspannungsdrücken standhalten können, wenn eine besondere Führung dieser Schneidkörper in den Aufnahmeschlitzen des Werkzeugskopfes vorgesehen ist.

Der Erfindung liegt daher die Aufgabe zugrunde, ein Senkwerkzeug der eingangs genannten Art so weiterzubilden, daß die Schneidkörper erhöhten Zerspannungsdrücken standhalten können.

Zur Lösung der gestellten Aufgabe ist die Erfindung durch die Merkmale des kennzeichnenden Teils des Anspruchs 1 gekennzeichnet.

Merkmal der Erfindung ist also, daß die Schneidkörper über eine in radialer Richtung weisende zusätzliche Nutenführung in den Aufnahmeschlitzen des Werkzeugkopfes verschiebbar geführt sind. Mit dieser zusätzlichen Führung wird der Vorteil erreicht, daß die Messer auch hohen Zerspannungsdrücken standhalten, insbesondere auch dann, wenn sie maximal weit in radialer Richtung aus dem Werkzeugkopf herausgefahren sind.

Die erfindungsgemäß vorgeschlagene, verbesserte Führung der Schneidkörper hat zur Folge, daß bei gleichen Größenverhältnissen eines Messerkopfes, wie er in den älteren Druckschriften beschrieben war, es nun möglich ist, Schneidkörper zu verwenden, die wesentlich weiter radial auswärts aus dem Werkzeugkopf herausgefahren werden können. Mit dieser besonderen Führung gelingt es beispielsweise, die Messer von einem minimalen Durchmesser von 32 mm auf einen maximalen Durchmesser von 70 mm aus dem Werkzeugkopf auszufahren und mit einem derartigen Senkwerkzeug auch hohen Zerspannungsdrücken standzuhalten.

Die im wesentlichen in Umfangsrichtung wirkenden Zerspannungskräfte werden so in optimaler Weise von den Keilflächen der Schneidkörper auf die zugeordneten Keilflächen der V-förmigen Nut übertragen und so auf den Werkzeugkopf eingeleitet, ohne daß es zu einer unzulässigen Biegung oder gar zu einem Bruch der Schneidkörper oder deren Lagerung kommen kann.

Wichtig hierbei ist allerdings, daß die Schneidkörper auch in einem bestimmten Mittenbereich aneinander anliegen, nämlich auch dann, wenn die Schneidkörper in ihre maximal ausgefahrene Stellung im Werkzeugkopf verstellt wurden. Dieser mittige Anlagebereich wird "Überdeckungsbereich" genannt.

Die in Umfangsrichtung wirkenden Zerspannungskräfte werden dann nicht nur über die Wandungen der Aufnahmeschlitze aufgenommen und über die Keilflächen der V-Nut, sondern durch das Aneinanderliegen der Schneidkörper wird der Zerspannungsdruck des einen Schneidkörpers unmittelbar auf den anderen Schneidkörper übertragen, der den Zerspannungsdruck in entgegengesetzter Richtung erhält, so daß sich die Zerspannungskräfte im Überdeckungsbereich faktisch aufheben und hierdurch die Führung der Schneidkörper im Werkzeugkopf relativ klein dimensioniert werden kann.

Aus fertigungstechnischen Gründen wird schneidet die V-förmige Nut die Mittenlängsachse des Werkzeugkopfes und ist mit der einen Keilfläche dem einen Schneidkörper, sowie mit der anderen Keilfläche dem anderen Schneidkörper zugeordnet.

Weitere Merkmale der Erfindung sind Gegenstand der übrigen Unteransprüche.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Fig. 1: Schematisiert gezeichneter Längsschnitt durch ein Senkwerkzeug nach der Erfindung;

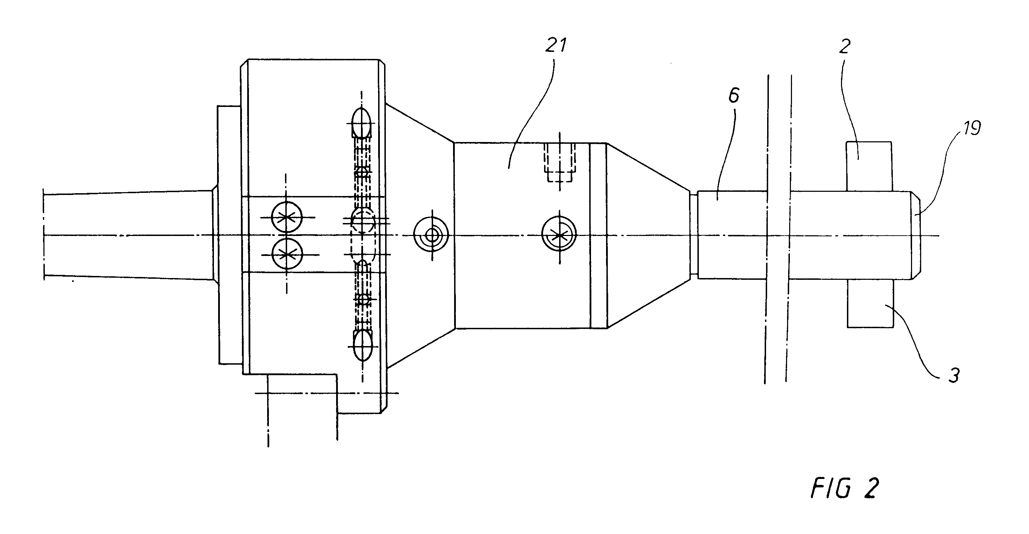

Fig. 2: Draufsicht auf das Senkwerkzeug nach Fig. 1;

Fig. 3: Schnitt durch den Werkzeugkopf in Höhe der Linie III-III in Fig. 1;

Fig. 4: Schematisiert gezeichnete Seitenansicht des Werkzeugkopfes mit Darstellung der Aufnahmeschlitze und der darin gelagerten Schneidkörper.

Bezüglich der Offenbarung der Funktion des Senkwerkzeuges wird wiederholt auf die eingangs genannten beiden Druckschriften verwiesen, wo eingehend die Funktion der radialen Verstellung der im Werkzeugkopf 1 radial verschiebbar gelagerten Schneidkörper 2, 3 beschrieben ist.

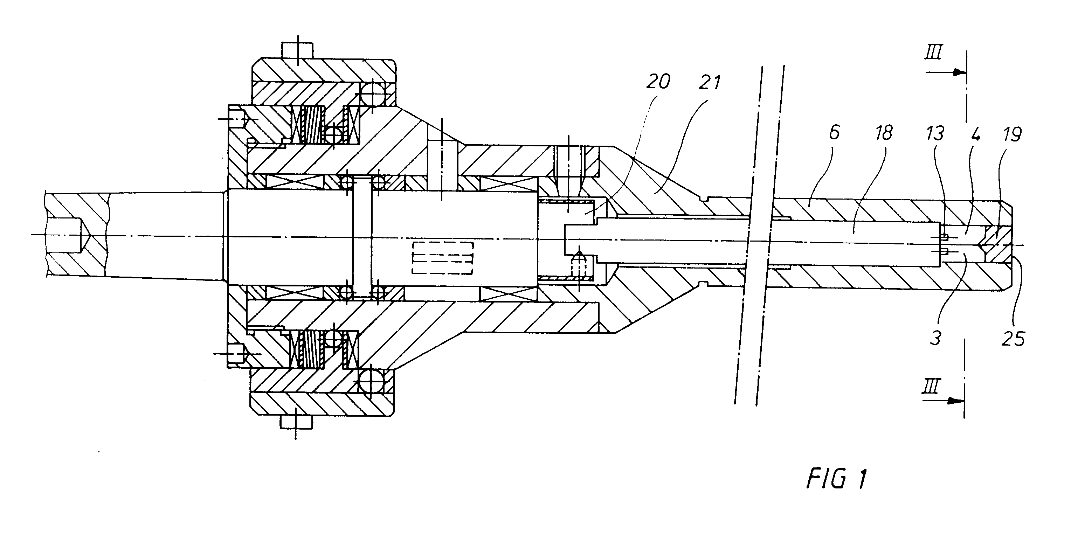

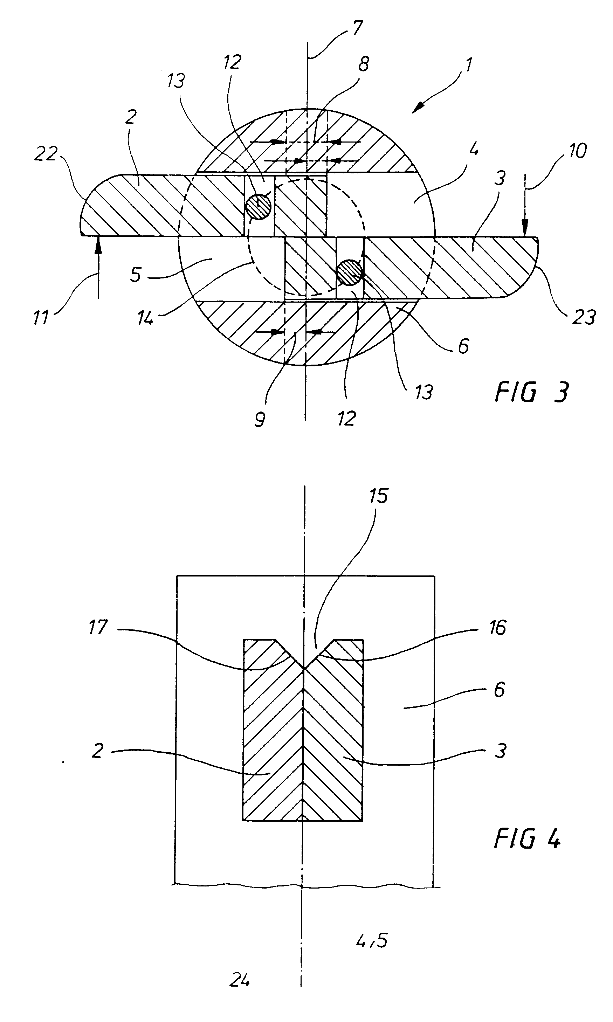

Die Verstellung der Schneidkörper 2, 3 erfolgt gemäß Fig. 1 und 3 über eine Wippe 18, die als im Messergehäuse 6 verdrehbar gelagerte Stange ausgebildet ist und mit ihrem einen Ende drehfest mit einer Verdrehbüchse 20 verbunden ist, mit der es möglich ist, die Verdrehung der Wippe 18 in Umfangsrichtung in einem genau festgelegten und begrenzten Winkelbereich vorzunehmen.

Am vorderen Ende der Wippe 18 sind zwei im Abstand voneinander angeordnete Bolzen 13 angebracht, welche in zugeordnete Quernuten 12 der Schneidkörper 2, 3 eingreifen. Wird nun die Wippe 18 verdreht, dann bewegen sich die Bolzen 13 im Bereich der Kreisbahn 14 und wegen ihrer exzentrischen Lagerung im Bezug zur Drehachse (Mittenlängsachse 24) werden die Schneidkörper 2, 3 in radialer Richtung aus dem Werkzeugkopf 1 herausgefahren oder eingefahren.

Gemäß den Fig. 3 und 4 sind die Schneidkörper 2, 3 in zwei benachbarten, nebeneinander liegenden und ineinander übergehenden Aufnahmeschlitzen 4, 5 gelagert, wobei Fig. 3 die Draufsicht auf die beiden nebeneinander angeordneten Aufnahmeschlitze 4, 5 und Fig. 4 die Stirnansicht dieser Aufnahmeschlitze zeigt.

Im Ausführungsbeispiel nach Fig. 3 wirkt der Zerspannungsdruck in den Pfeilrichtungen 10, 11, d. h. in Umfangrichtung auf den jeweiligen Schneidkörper 2, 3, der mit jeweils einer auswärts weisenden Schneide 22, 23 versehen ist. Nachdem die Pfeilrichtungen 10, 11 in Bezug zur Mittenlängsachse gegensätzlich gerichtet sind, wird der Zerspannungsdruck im wesentlichen im Überdeckungsbereich 8 der beiden Schneidkörper 2, 3 aufgenommen, die im Bereich der Aufnahmeschlitze 4, 5 innenseitig aneinander anliegen, auch wenn sie in ihre maximal ausgefahrene Stellung gebracht wurden.

Jeder Schneidkörper ist mit seinem rückwärtigen Ende, welches sich im Aufnahmeschlitz 4, 5 befindet, also um einen Abstand 9, über die Mittellinie 7 heraus verlängert, so daß sich der erwähnte Überdeckungsbereich 8 ergibt.

Wichtig ist noch, daß die Bolzen 13 der Wippe 18 mit Spiel in den Quernuten 12 der Schneidkörper 2, 3 gelagert sind, so daß die Bolzen selbst nicht an der Übertragung der Zerspannungskräfte teilhaben.

Die Fig. 4 zeigt eine V-förmige Nut, die aus einer V-förmigen Rippe 15 besteht, die im Ausführungsbeispiel nach Fig. 1 an der Unterseite eines Deckels 19 angeformt ist, der in die zentrale Ausnehmung 25 an der Stirnseite des Werkzeugkopfes 1 eingeklebt oder eingeschraubt ist.

Die V-förmige Rippe 15 bildet damit seitliche Keilflächen aus, die mit zugeordneten Keilflächen 16, 17 der Schneidkörper 2, 3 zusammenwirken und aneinander anliegen. Die von den Schneidkörpern 2, 3 auf die Keilflächen 16, 17 übertragenen Zerspannungskräfte werden damit zerlegt und in unterschiedliche Kraftkomponenten aufgeteilt, die damit besser in das Material des Werkzeugkopfes 1 eingeleitet werden können.

Der Werkzeugkopf 1 kann hierbei Teil des gesamten Werkzeugkörpers 21 (Fig. 1) sein. Er kann aber auch vom Werkzeugkörper 21 als getrenntes Teil ausgebildet sein.

**Patentansprüche**

1. Senkwerkzeug zum beidseitigen Anbringen von Planflächen an Durchgangsbohrungen mit einem über einen Schaft drehantreibbaren Werkzeugkopf, der zwei Schneidkörper (2,3) mit in entgegengesetzten Richtungen weisenden Schneiden aufweist, die im Werkzeugkopf über eine im Messergehäuse verdrehbar gelagerte Stange (18) radial verschiebbar und feststellbar in Aufnahmeschlitzen des Werkzeugkopfes geführt sind und die im Bereich der Aufnahmeschlitze aneinander liegen, wobei die beiden Schneidkörper im radial ausgefahrenen Zustand in einem Überdeckungsbereich (8) aneinander anliegen, der an den radial inneren Enden der Schneidkörper (2,3) ausgebildet ist, **dadurch gekennzeichnet,** daß die beiden Schneidkörper durch mindestens eine Nutenführung (15,16,17) in radialer Richtung in den Aufnahmeschlitzen (4,5) des Werkzeugkopfes geführt sind, und daß die Nutenführung (15,16,17) für die Schneidkörper (2,3) als V-Nut ausgebildet ist und aus einer die Längsmittenachse (24) des Werkzeugkopfes (1) symmetrisch schneidenden, im Profil etwa dreiecksförmigen Rippe (15) besteht, die an der Unterseite des Werkzeugkopfes (1) nach innen ragend angeordnet ist und die mit zugeordneten Keilflächen (16,17) der Schneidkörper (2,3) zusammenarbeitet.

2. Senkwerk nach Anspruch 1, **dadurch gekennzeichnet,** daß der im Werkzeugkopf (1) angeordnete Teil der Nutenführung (15,16,17) an der Unterseite eines Deckels (19) angeordnet ist und daß der Deckel (19) in einer stirnseitigen Ausnehmung (15) des Werkzeugkopfes (1) befestigt ist.

3. Senkwerk nach Anspruch 2, **dadurch gekennzeichnet,** daß der Deckel (19) in die stirnseitige Ausnehmung (25) des Werkzeugkopfes (1) eingeklebt ist.

## Claims

1. Counterbore for forming plane faces on through-holes with a tool head which can be driven in rotation by a shank and which comprises two cutting bodies (2, 3) with cutting edges pointing in opposite directions which are guided radially displaceably and lockably in the tool head by means of a rod (18) mounted rotatably in the blade housing, in holding slots of the tool head, and which lie adjacent to each other in the region of the holding slots, wherein the two cutting bodies in the radially extended state lie adjacent to each other in an overlap region (8) which is formed at the radially inward ends of the cutting bodies (2, 3), characterised in that the two cutting bodies are guided by at least one guide groove (15, 16, 17) in a radial direction in the holding slots (4, 5) of the tool head and that the guide groove (15, 16, 17) for the cutting bodies (2, 3) is constructed as a V-groove and consists of a rib (15) of approximately triangular profile which symmetrically intersects with the longitudinal centre axis (24) of the tool head (1) and which is arranged inwardly projecting on the lower side of the tool head (1) and cooperates with associated wedge surfaces (16, 17) of the cutting bodies (2, 3).

2. Counterbore according to claim 1, characterised in that the portion of the guide groove (15, 16, 17) arranged in the tool head (1) is arranged on the lower side of a cover (19) and that the cover (19) is mounted in an end recess (15) of the tool head (1).

3. Counterbore according to claim 2, characterised in that the cover (19) is glued in the end recess (25) of the tool head (1).

## Revendications

1. Outil de lamage pour produire des surfaces planes des deux côtés de perçages de passage, comportant une tête d'outil apte à être entraînée en rotation par l'intermédiaire d'une tige et pourvue de deux corps coupants (2, 3) possédant des lames qui sont orientées dans des sens opposés, qui sont guidées dans la tête d'outil, par l'intermédiaire d'une barre (18) montée rotative dans le carter de lame, de façon à pouvoir être déplacées radialement et arrêtées dans des fentes de logement de ladite tête d'outil, et qui sont appliquées l'une contre l'autre dans la zone des fentes de logement, les deux corps coupants étant appliqués, à l'état déployé radialement, l'un contre l'autre dans une zone de chevauchement (8) définie au niveau des extrémités intérieures radiales des corps coupants (2, 3), caractérisé en ce que les deux corps coupants sont guidés dans le sens radial dans les fentes de logement (4, 5) de la tête d'outil par une ou plusieurs glissières à rainure (15, 16, 17), et en ce que la glissière à rainure (15, 16, 17) prévue pour les corps coupants (2, 3) est conçue comme une rainure en V et se compose d'une nervure (15) à profil approximativement triangulaire, qui coupe symétriquement l'axe médian longitudinal (24) de la tête d'outil (1), qui est disposée de façon à faire saillie vers l'intérieur, au niveau de la face inférieure de la tête d'outil (1), et qui coopère avec des surfaces cunéiformes associées (16, 17) des corps coupants (2, 3).

2. Outil de lamage selon la revendication 1, caractérisé en ce que la partie de la glissière à rainure (15, 16, 17) disposée dans la tête d'outil (1) est disposée au niveau de la face inférieure d'un couvercle (19), et en ce que le couvercle (19) est fixé dans une cavité (15) de la tête d'outil (1) prévue côté frontal.

3. Outil de le lamage selon la revendication 2, caractérisé en ce que le couvercle (19) est collé dans la cavité (25) de la tête d'outil (1) prévue côté frontal.

FIG 1

EP 0 231 818 B1

FIG 2

EP 0 231 818 B1

FIG 3

FIG 4